# EUROPEAN PATENT APPLICATION

(11) **EP 3 470 277 A1**
(43) Date of publication of application: **17.04.2019**
(21) Application number: 17196138.6
(22) Date of filing: 12.10.2017
(51) Int. Cl.: B60R 25/31, G08B 21/24

(54) **SECURITY SYSTEM AND METHOD**

(71) Applicant: Continental Automotive GmbH, 30165 Hannover (DE)
(72) Inventor: Narasappareddygari, Praveen, 560100 Bangalore (IN); Onkarappa, Naveen, 560100 Bangalore (IN)

(57) **Abstract**

A security system (3) for a motorbike comprises an engine status detection module (31) that is configured to detect whether an engine of the motorbike is turned on or off, a user detection module (32) that is configured to detect whether a user is within a certain range of or seated on the motorbike, and a key detection module (33) that is configured to detect whether a key of the motorbike is inserted into the ignition. The security system (3) further comprises an alert module (34) that is configured to generate or cause an alarm if the engine of the motorbike is turned off, the user is not within a certain range of or seated on the motorbike and the key is inserted into the ignition.

## Description

The current invention relates to a security system and a related method, in particular a security system for a motorbike.

Most motorbikes today provide several security systems. For example, some motorbikes alert the motorcyclist if the side stand, also called kickstand, of the motorbike is still down when the motorcyclist drives off, or when the tank cap is still open when the motorcyclist tries to start the engine after filling in fuel. Such systems as well as other systems support the motorcyclist in many different ways such as in safely operating the motorbike, for example, and, therefore, improve the comfort for the user in safely and securely handling the motorbike.

The problem to be solved by the present invention is to provide a security system and method which further improve the safety, security and comfort level of the motorbike as compared to present solutions.

This problem is solved by a security system according to claim 1 and a method according to claim 11. Configurations and further developments of the invention are the subject of the dependent claims.

A security system for a motorbike includes an engine status detection module that is configured to detect whether an engine of the motorbike is turned on or off, a user detection module that is configured to detect whether a user is within a certain range of or seated on the motorbike, and a key detection module that is configured to detect whether a key of the motorbike is inserted into the ignition. The security system further comprises an alert module that is configured to generate or cause an alarm if the engine of the motorbike is turned off, the user is not within a certain range of or seated on the motorbike and the key is inserted into the ignition.

This helps the user to remember taking the keys of the motorbike with him when he parks the motorbike. This helps to increase the security level, as it may be avoided that unauthorized persons take a key which has been forgotten in the ignition of a motorbike. The stress level of the user may be decreased in this way.

The alarm may be an acoustical, visual, or haptical alarm to attract the attention of the user when he is leaving the motorbike with the key still in the ignition.

The alarm may be generated by a unit that is attached or connected to the motorbike. This may help to attract the attention of the user, because he may clearly notice the alarm when leaving the motorbike. For example, units may be used which are attached or connected to the motorbike for other purposes. In this way, no additional units will be needed.

It is also possible that the alarm is generated by an electronic device of the user, wherein the electronic device is wirelessly connected to the alert module. Most users carry electronic devices with them such as mobile phones, for example. If an electronic device of the user generates the alarm, no additional devices or units are needed for generating the alarm.

The engine status detection module may be configured to detect a voltage of a battery or a voltage of a system of the motorbike. Such a voltage is usually a clear indication whether the engine is still running or not.

The user detection module may comprise a pressure sensor. Such a pressure sensor may be arranged in the seat of the motorbike, for example and may detect whether a weight of the user when the user is seated on the motorbike.

The user detection module may be configured to set up a wireless connection with an electronic device of the user. The user detection module may be configured to detect when the electronic device of the user is outside a certain range from the motorbike. In this way it may be easily detected whether the user is still within a certain range of the motorbike.

The key detection module may comprise a capacitive sensor. With a capacitive sensor it may be easily detected whether a key is inserted in the ignition or not.

The security system may further comprise a power supply which is independent from a motorbike battery. The system, therefore, may also function when the motorbike battery is low or empty.

A method comprises detecting whether an engine of a motorbike is on or off, detecting whether a user is within a certain range of or seated on the motorbike, detecting whether a key of the motorbike is inserted into the ignition of the motorbike, and generating or causing an alarm if it is detected that the engine of the motorbike is turned off, the user is not within a certain range of or seated on the motorbike and the key is inserted into the ignition switch.

Examples are now explained with reference to the drawings. In the drawings the same reference characters denote like features.
Figure 1 schematically illustrates a motorbike.
Figure 2 schematically illustrates an example of a security system according to the present invention.
Figure 3 exemplarily illustrates in a flow diagram a method according to the present invention.

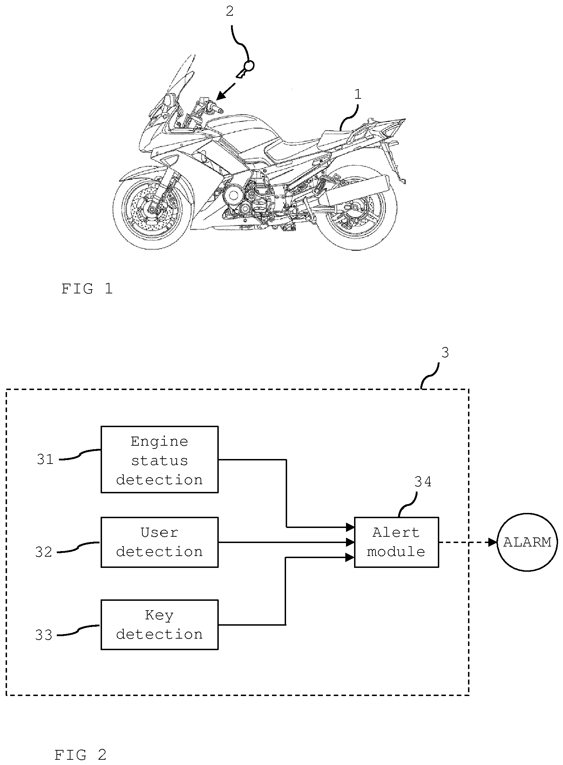

Referring to Figure 1, a motorbike 1 is schematically illustrated. For starting the engine of the motorbike 1, a key 2 has to be inserted into an ignition (not specifically illustrated) of the motorbike 1. When inserted into the ignition, the key 2 has to be turned to an ON position in order to be able to start the engine. Usually, further actions need to be performed to start the engine such as pressing a start button of the motorbike 1, for example.

When a user turns off the engine and parks the motorbike 1, he has to remove the key 2 from the ignition. However, a user might forget to take the key 2 from the ignition, especially when he's in hurry. This makes it easy for other unauthorized persons to start the engine and take the motorbike. To avoid such an unwanted situation, a security system is provided.

A security system 3 is exemplarily illustrated in Figure 2. The security system 3 is configured to generate an alarm when a user leaves his motorbike without taking the key 2 with him. Therefore, the security system 3 includes an engine status detection module 31. The engine status detection module 31 is configured to detect whether the engine of the motorbike is on (running) or off. There are several different ways how it may be detected whether the engine is on or off. For example, a battery voltage of the battery of the motorbike 1 or a voltage of any other system of the motorbike 1 which automatically turns off when the engine is off may be detected. The voltage (voltage = 0V or voltage > 0V) is usually an indication whether the engine is still running or not.

Monitoring a voltage, however, is only an example. It may be detected in any other suitable way whether the engine is on or off.

The security system 3 further includes a user detection module 32. The user detection module 32 is configured to detect whether a user is within a certain range of or seated on the motorbike 1. For example, the user detection module 32 may be configured to set up a wireless connection with an electronic device of the user. Most of the users today own cellphones, smartphones, tablets, laptops, blackberries, smart watches or bands or other electronic devices which they usually carry with them. For example, a smartphone of the user may be known to the user detection module 32. If a smartphone is known to the user detection module 32 this means that usually a connection between the two devices has been established at least once before (e.g., so-called pairing if a Bluetooth connection is used). The user detection module 32 may automatically set up a wireless connection, e.g. a Bluetooth connection, when the smartphone is within a certain range. A Bluetooth connection, for example, usually has a range of several meters and up to about 100 meters. Other wireless connections may have a range of several centimeters of up to several meters.

When the user detection module 32 is able to set up a wireless connection with an electronic device of the user of the motorbike 1, this means that the electronic device is within a certain range (e.g., within a radius of 1m, 2m, 5m, or 10m) of the motorbike 1. As users usually carry the electronic device (e.g., a smartphone) on the body, e.g., in a trouser pocket, the presence of the electronic device may be an indication that the user himself is within a certain range of the motorbike 1. This is, however, only an example. Any other suitable method may be used to detect whether the user is within a certain range of the motorbike. For example, any kind of suitable proximity sensor may be used to detect whether the user is within a certain range of the motorbike 1. Additionally or alternatively it is also possible to detect whether the user is seated on the motorbike 1. For example, a pressure sensor (not illustrated) may be arranged anywhere on or within the seat of the motorbike 1 and may be configured to detect the weight of a user seated on the motorbike. A pressure sensor may include a capacitive sensor, for example. Any other sensors could also be used such as thermal sensors that are configured to detect the body heat of a user seated on the motorbike, for example.

For example, the security system 3 may be configurable by the user. This means that the user may be able to decide whether he wants the security system 3 to generate an alarm if the user is standing next to his motorbike 1 (within a certain range of the motorbike), but is not seated on the motorbike 1. Other users might prefer it if the security system only generates an alert when a distance between the user and the motorbike 1 is greater than a certain threshold such as more than 1m, more than 2m, more than 5m, or more than 10m, for example. Any other distances are possible.

In the same way that has been described above for detecting the presence of a user, a pillion rider of the motorbike 1 could be detected. For example, the user detection module 32 may detect that the user walks away from the motorbike 1, because the smartphone of the user leaves the range of the wireless connection. However, a person, e.g., a pillion rider, may still be detected on the seat of the motorbike 1. In such a case, no alarm could be generated, as it may be concluded that there is still one authorized person near the motorbike 1.

The security system 3 further includes a key detection module 33. The key detection module 33 is configured to detect whether the key 2 is still inserted into the ignition. For example, the key detection module 33 may include a capacitive sensor that is configured to detect a key 2 in the ignition of the motorbike 1.

An alarm may be a visual, acoustical, or haptical alarm, for example. For example, the motorbike 1 may comprise unit that is attached or connected to the motorbike 1 such as a dashboard screen, for example, and the alarm may be displayed as a message on the dashboard screen. It is also possible that the motorbike 1 comprises a (red) light which may turn on or flash when an alarm is generated. It is also possible that a signal tone of any kind is generated. It is also possible, that the alarm is generated by an electronic device of the user. The electronic device may be a cellphone, smartphone, smart watch or band, tablet, laptop, or blackberry, for example. For example, the security system 3 may be connected to a smartphone of the user via an internet or a mobile connection. The security system 3 may send a signal to the electronic device which causes the electronic device to generate an alarm. For example, the electronic device could display an appropriate text on its display, the electronic device could start to vibrate or could generate an acoustic alarm. An SMS or email could be sent to the user which he can retrieve on his mobile phone. Any other kind of alarm is possible.

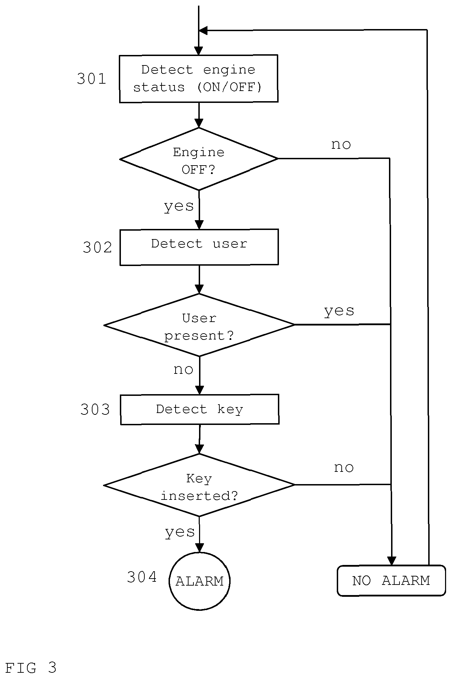

The conditions which have to be fulfilled before an alarm is generated may be determined simultaneously or successively. As is exemplarily illustrated in Figure 3, it may first be detected whether the engine is still running (engine on or off) (step 301) . In the example of Figure 3, no alarm is generated when the engine is on and the method returns to step 301. If the engine is off, the method proceeds to step 302 and detects whether a user is within a certain range of or seated on the motorbike. If a user is detected, no alarm is generated and the method returns to step 301. Alternatively, the method may also return to step 302 at this point if a user is detected. If no user is detected, the method may proceed to step 303 and detect whether a key is inserted in the ignition or not. If no key is inserted in the ignition, no alarm may be generated and the method may return to step 301. It is, however, also possible that the method returns to step 302 or 303 at this point. If in step 303 a key is detected in the ignition, an alarm may be generated (step 304).

The order of the steps in Figure 3 is just one example. The steps may be performed in any suitable order. It is also possible to perform the steps essentially at the same time. If at least one of the requirements for generating an alarm is not fulfilled, no alarm is generated. However, the security system 3 may still keep on monitoring the requirements.

The security system 3, therefore, provides an anti-theft protection, reduces the effort of the user, as he does not need to actively remember to take the keys 2, and reduces the mental stress of the user, as he might be worried to forget to take the keys.

The security system 3 may be supplied by the battery of the motorbike 1. It is, however, also possible that the security system 3 has its own power supply which makes it independent from the battery of the motorbike. The security system 3 may be supplied by any suitable energy source such as one or more batteries or accumulators.

### Bezugszeichenliste

- 1: motorbike
- 2: key
- 3: security system
- 31: engine status detection module
- 32: user detection module
- 33: key detection module
- 34: alert module

## Claims

1. A security system (3) for a motorbike (1) comprising an engine status detection module (31) that is configured to detect whether an engine of the motorbike (1) is turned on or off;
a user detection module (32) that is configured to detect whether a user is within a certain range of or seated on the motorbike (1);
a key detection module (33) that is configured to detect whether a key (2) of the motorbike is inserted into the ignition; and
an alert module (34) that is configured to generate or cause an alarm if the engine of the motorbike (1) is turned off, the user is not within a certain range of or seated on the motorbike (1) and the key (2) is inserted into the ignition.

2. The security system (3) of claim 1, wherein the alarm is an acoustical, visual, or haptical alarm.

3. The security system (3) of claim 1 or 2, wherein the alarm is generated by a unit that is attached or connected to the motorbike (1) .

4. The security system (3) of claim 1, 2 or 3, wherein the alarm is generated by an electronic device of the user, wherein the electronic device is wirelessly connected to the alert module (34) .

5. The security system (3) of any of claims 1 to 4, wherein the engine status detection module (31) is configured to detect a voltage of a battery or a voltage of a system of the motorbike (1) .

6. The security system (3) of any of claims 1 to 5, wherein the user detection module (32) comprises a pressure sensor.

7. The security system (3) of any of claims 1 to 6, wherein the user detection module (32) is configured to set up a wireless connection with an electronic device of the user.

8. The security system (3) of claim 7, wherein the user detection module (32) is configured to detect when the electronic device of the user is outside a certain range from the motorbike (1).

9. The security system (3) of any of the preceding claims, wherein the key detection module (33) comprises a capacitive sensor.

10. The security system (3) of any of the preceding claims, further comprising a power supply which is independent from a motorbike battery.

11. A method comprising
detecting whether an engine of a motorbike (1) is on or off; detecting whether a user is within a certain range of or seated on the motorbike (1);
detecting whether a key (2) of the motorbike (1) is inserted into the ignition of the motorbike (1); and
generating or causing an alarm if it is detected that the engine of the motorbike (1) is off, the user is not within a certain range of or seated on the motorbike (1) and the key (2) is inserted into the ignition switch.
